(19) **Europäisches Patentamt / European Patent Office / Office européen des brevets**

(11) **EP 2 362 192 B1**

(12) **EUROPEAN PATENT SPECIFICATION**

(45) Date of publication and mention
of the grant of the patent:
**19.06.2013 Bulletin 2013/25**

(51) Int Cl.:
*G01F 9/00* (2006.01)     *G01F 9/02* (2006.01)
*G01F 23/00* (2006.01)

(21) Application number: **11155428.3**

(22) Date of filing: **22.02.2011**

(54) **Fuel economy calculation correction**

Korrektur der Kraftstoffeinsparberechnung

Correction de calcul d'économie de carburant

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.02.2010 GB 201003204**

(43) Date of publication of application:
**31.08.2011 Bulletin 2011/35**

(73) Proprietor: **Nissan Motor Manufacturing (UK) Ltd.
Cranfield
Bedfordshire MK43 0DB (GB)**

(72) Inventor: **Williams, John
Cranfield, Bedfordshire MK43 0DB (GB)**

(56) References cited:
**EP-A1- 1 865 180      WO-A1-00/17610
US-A1- 2004 133 337      US-A1- 2006 190 149**

**Description**

The present invention relates generally to fuel economy calculation and display for motor vehicles. More specifically, the present invention relates to the provision of greater accuracy in the calculation and display of fuel economy for motor vehicles.

Fuel economy is a term used to represent fuel efficiency of motor vehicles. Fuel economy is dependent on various factors, e.g., performance of an engine, weight of a vehicle, and environmental factors. Fuel economy information is important to motor vehicle drivers as it provides an indication of the performance of a vehicle and the cost of vehicle usage.

Fuel economy is expressed by the distance travelled per unit fuel. It is often provided in units of "miles per gallon" *(mpg).* This unit is commonly used in the United Kingdom and the United States of America. Other units, e.g., "kilometres per litre" *(km/l),* are also in use. Higher fuel economy values represent higher fuel efficiency.

A related measure is fuel consumption, which is sometimes used in European countries. Fuel consumption is expressed by the amount of fuel used per unit distance. A unit used in Europe is "litres per 100 kilometres" (*L/100km*). Lower fuel consumption values represent higher fuel efficiency.

Different motor vehicle manufacturers may use different methods for calculating and displaying to a driver fuel economy information. They may also use different calculation methods for different vehicle models. However, most conventional calculation methods obtain fuel economy based on the amount of fuel delivered to the engine.

Most modern motor vehicles have an engine control unit to control operation of the engine, e.g. fuel injection and ignition timing. Engine control units are also widely used to assist in calculation of fuel economy. The engine control unit provides an indication of fuel volume delivered to the engine over a period of time which is used along with the distance travelled by the motor vehicle which can be obtained from the vehicle's odometer to calculate fuel economy. This calculation can be performed in a display means, e.g. combi-meter, or elsewhere. The calculated fuel economy is displayed on a display to the driver.

The accuracy of fuel economy calculation can be tested during vehicle development and, if required, an appropriate adjustment can be applied to the calculated fuel economy value to improve the accuracy. However, the accuracy of fuel economy provided by the engine control unit is dependent on the condition of the motor vehicle over time. During the life of the motor vehicle, changes in the state of fuel delivery components, e.g., fuel injectors, may lead to reduced accuracy. For example, over time the condition of fuel injectors in an engine may deteriorate due to partial blockage by contaminants in the fuel. The engine control unit is not aware of these changes and so the amount of fuel it instructs the injectors to inject into the engine may differ from the actual amount of fuel that is injected into the engine. As a result, the fuel economy calculated and presented to a driver becomes less accurate.

US 2006/0,190,149 primarily discloses an auxiliary vehicle fuel tank system and related computer module. It also discloses a method of correcting displayed fuel consumption figures by a vehicle user performing calculations regarding at least three fuel purchases; then keying the results into the computer module.

WO 00/17610 discloses calculation and use of a correction factor to correct a displayed fuel consumption figure in a vehicle.

The present invention aims to address this problem and display to a driver a more accurate fuel economy figure.

Accordingly, the present invention provides a system for providing fuel economy information in a motor vehicle, comprising:

a first mechanism configured to determine a first fuel economy using a first process;
a second mechanism configured to determine a second fuel economy using a second process; and
a mechanism configured to generate a fuel economy offset based on the first fuel economy and the second fuel economy, wherein:

the system adjusts a current fuel economy measure determined in accordance with the first process using the fuel economy offset;
and the system further comprises a fuel sensor in a fuel tank of the motor vehicle and configured to measure a volume of fuel in the tank;
the system being configured to detect a refuel event;
characterized in that the system is further configured to generate the fuel economy offset when the refuel event is detected.

According to an embodiment, the system is configured to detect the refuel event by comparing a fuel volume at an ignition-on state of vehicle operation with a fuel volume prior to the previous ignition-off state of vehicle operation.

According to an embodiment, the first mechanism is configured to determine fuel economy based on a volume of fuel delivered to an engine of the motor vehicle and a distance travelled by the motor vehicle.

According to an embodiment, the first mechanism is configured to determine the first fuel economy based on a volume of fuel delivered to the engine since the last refuel event and a distance travelled since the last refuel event.

According to an embodiment, the system is configured to obtain the volume of fuel delivered to the engine from an engine control unit of the motor vehicle.

According to an embodiment, the second mechanism is configured to determine fuel economy based on a volume of fuel removed from a fuel tank since a last refuel event and a distance travelled by the motor vehicle since the last refuel event.

According to an embodiment, the offset is dependent on the difference between the first fuel economy and the second fuel economy; and the system is configured to generate the offset only if the second fuel economy is different from the first fuel economy.

According to an embodiment, the system comprises a display means configured to determine and display fuel economy information.

The present invention also provides a method of providing fuel economy information in a motor vehicle, comprising:

generating a first fuel economy using a first process;
generating a second fuel economy using a second process;
generating a fuel economy offset based on the first fuel economy and the second fuel economy; and
adjusting a current fuel economy measure calculated in accordance with the first process using the fuel economy offset;
characterized in that:

the method further comprises detecting a refuel event, wherein the fuel economy offset is generated when the refuel event is detected.

According to an embodiment, the refuel detection comprises comparing a fuel volume at an ignition-on state of vehicle operation with a fuel volume at the previous ignition-off state of vehicle operation.

According to an embodiment, the first process calculates fuel economy based on a volume of fuel delivered to an engine of the motor vehicle and a distance travelled by the motor vehicle.

According to an embodiment, the first fuel economy is calculated based on a volume of fuel delivered to the engine since the last refuel event and a distance travelled by the motor vehicle since the last refuel event.

According to an embodiment, the second process calculates fuel economy based on a volume of fuel removed from a fuel tank since a last refuel event and a distance travelled by the motor vehicle since the last refuel event.

According to an embodiment, the offset is dependent on the difference between the first fuel economy and the second fuel economy; and the offset is generated only if the second fuel economy is different from the first fuel economy.

According to an embodiment, the method further comprises displaying the adjusted current fuel economy measure.

The present invention also provides a computer readable medium having stored thereon instructions for carrying out the aforementioned method.

The present invention differs from, and is advantageous over, conventional fuel economy calculation systems and methods through its use of a refuel event detection system and method.

Various embodiments of the present invention are illustrated in the appended drawings, wherein:

Figure 1 is a diagram illustrating an exemplary system for providing fuel economy information according to an embodiment of the present invention.

Figure 2 shows an exemplary look-up table used in the system of figure 1.

Figure 3 is a flowchart illustrating an exemplary process of calculating fuel economy offset used in a method of the present invention; and

Figure 4 is a flowchart illustrating an exemplary method of providing fuel economy information according to an embodiment of the present invention.

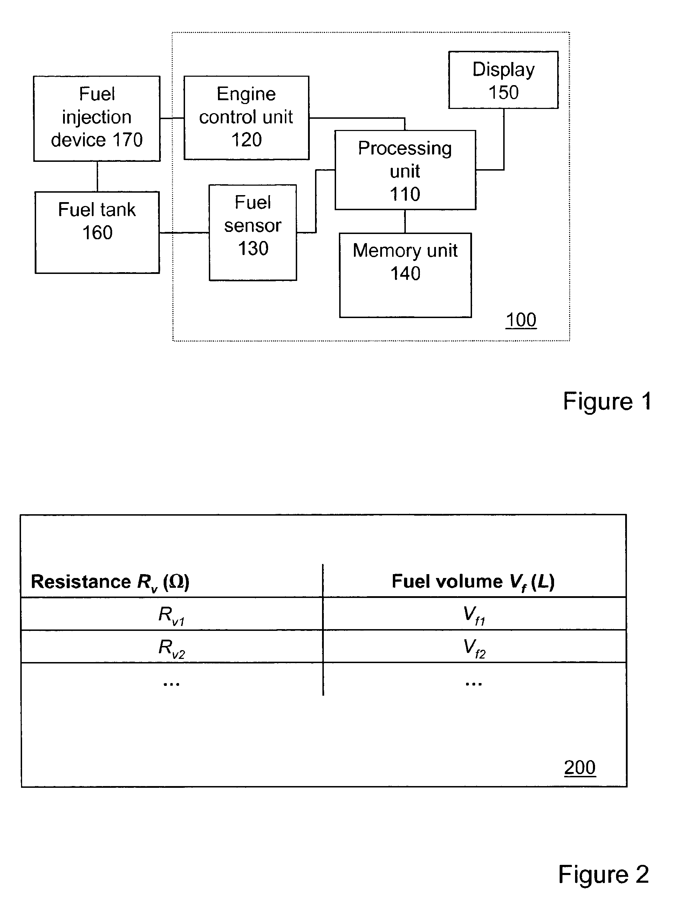

An exemplary system for providing fuel economy information in a motor vehicle according to the present invention is illustrated in figure 1. The system 100 comprises a processing unit 110, a memory unit 140, a display 150, an engine control unit 120 and a fuel sensor 130. The processing unit 110 is in communication with the engine control unit 120, the fuel sensor 130, the memory unit 140 and the display 150.

The memory unit 140 is accessible by the processing unit 110. The memory unit 140 may comprise non-volatile storage, e.g., read-only memory (ROM), for storing various pre-stored information, e.g. pre-programmed instructions, for the processing unit 110 to conduct fuel economy calculation. The memory unit 140 may also comprise volatile storage, e.g., random access memory (RAM), for storing data generated by the processing unit 110. The processing unit can not only read data from the RAM storage, but also write data to the RAM storage. Of course, other suitable arrangements of memory exist and may be used.

The display 150 displays fuel economy information to the driver. The display 150 may also display other information, e.g., distance travelled by the motor vehicle and/or fuel level in a fuel tank 160 of the motor vehicle. The display 150 may be a digital display, an analogue meter, or a combination of both. In an embodiment of the present invention, the display 150 is a part of an instrument cluster or combi-meter which displays amongst other things distance travelled by the motor vehicle. The instrument cluster or combi-meter is also capable of displaying a fuel consumption value or fuel economy value.

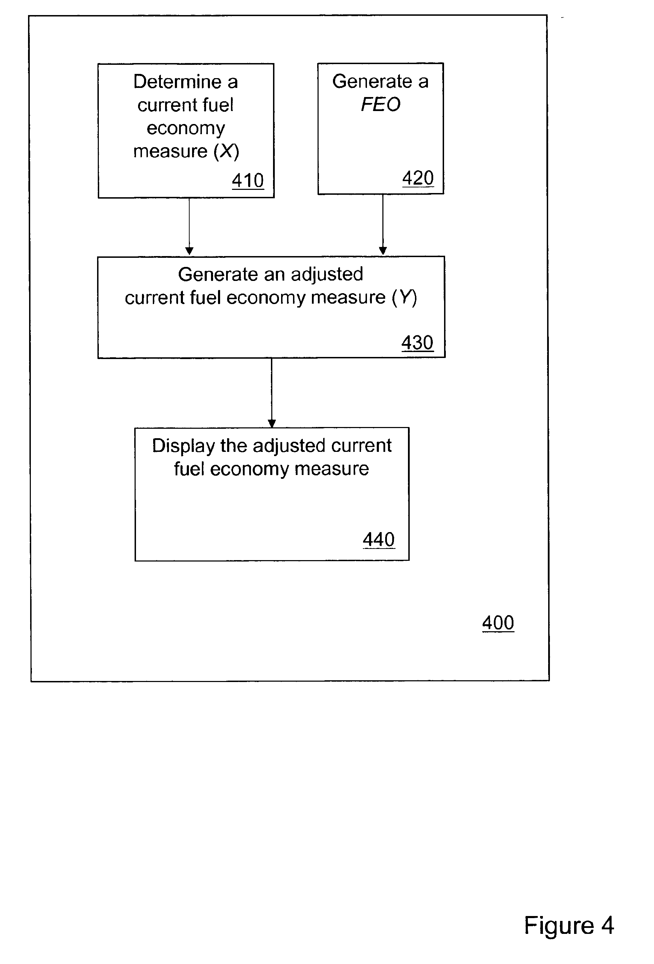

The processing unit 110, which in a preferred embodiment is a component of an instrument cluster or combi-meter, calculates fuel economy and displays the calculated fuel economy information on the display 150. Figure 4 illustrates a method of providing fuel economy information which is carried out within the processing unit 110. The processing unit 110 comprises a first mechanism and a second mechanism for calculating fuel economy information. These mechanisms are described separately below.

The first mechanism determines fuel economy based on fuel volume delivered to an engine of the motor vehicle. Fuel is delivered to the engine by means of a fuel injection device 170 which is in fluid communication with the fuel tank 160 and is controlled by an engine control unit 120 responsible for the volume of fuel delivered to the engine. As mentioned above, during the life of the motor vehicle, the performance of fuel injectors may change, and thus the fuel volume delivered to the engine can differ from that which the engine control unit 120 instructs to be injected. This may cause error, or inaccuracy, in the displayed fuel economy. The present invention utilises a second mechanism to compensate for this error or inaccuracy.

According to an embodiment, the second mechanism calculates fuel economy based on fuel volume removed from the fuel tank since a last refuel event, which may equate to fuel volume added in a current or most recent refuel event. According to an embodiment of the present invention, refuel detection is carried out by the system 100 by comparing a volume of fuel in the fuel tank at an ignition-on state of vehicle operation with the volume of fuel in the tank at the previous ignition-off state of vehicle operation. If these values differ, i.e. if the former exceeds the latter, a refuel event is detected. Once the system 100 detects a refuel event, it generates a fuel economy offset (FEO).

Although the above refuel detection method works for vehicles in most countries, it fails to detect a refuel event if the vehicle is in an ignition-on state during a refuel event. This can be the case in hot countries, e.g. in the Gulf Coast, such that air-conditioning can remain operational during a refuel event. The present invention provides an alternative refuel detection method that can be used for vehicles in such circumstances. According to the alternative refuel detection method, a refuel event is detected if there is a change in fuel volume when the vehicle is in an ignition-on state and when the vehicle speed is zero.

When a refuel event is detected, the second mechanism is used to determine a second fuel economy value (C) based on a volume of fuel (A) actually consumed since a last refuel event (i.e. a volume of fuel removed from the fuel tank) and a distance travelled (B) since the last refuel event. This determination can be carried out according to Equation 1:

$$C = B/A \qquad\qquad (1)$$

The first mechanism determines a first fuel economy value (D) based on a volume of fuel ($A'$) delivered to an engine of a motor vehicle (according to the engine control unit) and a distance travelled ($B$) since the last refuel event. This calculation can be carried out according to Equation 2:

$$D = B/A' \qquad\qquad (2)$$

The system 100 compares the second fuel economy value (C) with the first fuel economy value (D) and determines a fuel economy offset (FEO) if required. If the second fuel economy value (C) equates to the first fuel economy value (D), i.e., the fuel volume (A) actually consumed since the last refuel event equates to the fuel volume ($A'$) delivered to the engine since the last refuel event, then no compensation is needed. Otherwise, an FEO is calculated according to *Equation 3:*

$$FEO = 1 - \left( \frac{(D - C)}{D} \right) \qquad (3)$$

The system 100 then applies the FEO to a current fuel economy measure ($X$) to calculate an adjusted fuel economy measure ($Y$) according to *Equation 4.* The current fuel economy measure ($X$) is determined based on a volume of fuel delivered to the engine (according to the engine control unit) and a distance travelled by the motor vehicle, i.e. according to the first mechanism.

$$Y = X \cdot FEO \qquad (4)$$

The adjusted fuel economy measure ($Y$) is displayed on the display 150 providing a more accurate reading to the driver of the vehicle.

Once an FEO has been determined at a refuel event, the FEO will be applied to the current fuel economy until a new refuel event is detected. In other words, the FEO is updated upon detection of a refuel event. When a new refuel event is detected, the system 100 determines a new FEO based on the fuel consumption since the last refuel event and applies the new FEO to the current fuel economy measure until a further refuel event is determined.

According to an embodiment of the present invention, the system 100 determines the fuel volume actually consumed by the engine since the last refuel event using the fuel sensor 130. The fuel sensor 130 is located within the fuel tank 160 of the motor vehicle such that it can measure the level of fuel within the tank and sense when the fuel level changes. The fuel sensor 130 may comprise a variable resistor, the resistance of which is responsive to changes in fuel volume in the tank.

The resistance of the variable resistor is in a predetermined relation with the volume of fuel in the fuel tank 160. This predetermined relationship may be stored in the memory unit 140 of the system 100. Figure 2 illustrates this relationship in the form of a look-up table 200. Each fuel sensor reading $R_v$ corresponds to a fuel volume in the fuel tank $V_f$ (in this example expressed in litres). The processor 110 obtains a first fuel sensor reading $R_{v1}$ before a refuel event and a second fuel sensor reading $R_{v2}$ after the refuel event. It is configured to obtain these readings as required. The processor 110 checks the look-up table 200 stored in the memory unit 140 to determine a first fuel volume $V_{f1}$ corresponding to the first fuel sensor reading $R_{v1}$ and a second fuel volume $V_{f2}$ corresponding to the second fuel sensor reading $R_{v2}$.

According to an embodiment of the present invention, the volume of fuel (A) consumed since a last refuel event is determined based on a volume of fuel ($A_1$) in the tank immediately after an immediately previous refuel event and a volume of fuel ($A_2$) remaining in the tank before a current refuel event. The volume of fuel (A) consumed since the last refuel event is calculated by subtracting $A_2$ from $A_1$. The fuel levels $A_1$ and $A_2$ may be determined by the fuel sensor 130. The fuel levels $A_1$ and $A_2$ may be stored in a memory device which is accessible by the processor 110, e.g. in the memory unit 140. Alternatively, the fuel levels $A_1$ and $A_2$ may be stored in other locations.

According to an alternative embodiment, a fuel volume ($A_3$) added during the current refuel event is treated as equivalent to the fuel volume (A) actually consumed since the last refuel event. This embodiment may require a full refuel during refuel events and may inhibit generation or use of an FEO if the system 100 detects that a full refuel event has not taken place, if this alternative embodiment is used alone. However, this embodiment may also be used selectively with the previous embodiment when the system 100 detects two consecutive full refuel events.

A full refuel event may be detected by the fuel sensor 130. For instance, if the fuel sensor 130 resistance is at a maximum, a full tank exists. The fuel volume ($A_3$) added during a current refuel event may be determined by the change of resistance of the fuel sensor 130 between an ignition-on state and an ignition-off state of vehicle operation or if such a change occurs during an ignition-on state whilst speed is zero. For example, the first fuel volume $V_{f1}$ represents the volume of fuel in the fuel tank 160 before the refuel event and the second fuel volume $V_{f2}$ represents the volume of fuel in the fuel tank 160 after the refuel event. If the processor 110 detects that a second or subsequent full refuel event has taken place, the fuel volume ($A_3$) added during the refuel event is determined by the processor 110 by subtracting $V_{f1}$ from $V_{f2}$. Value $A_3$ represents substantially actual fuel consumption since the last refuel event and is independent of the performance of the fuel injection components of the motor vehicle and is utilised, for example, as quantity A in the *Equation 1.*

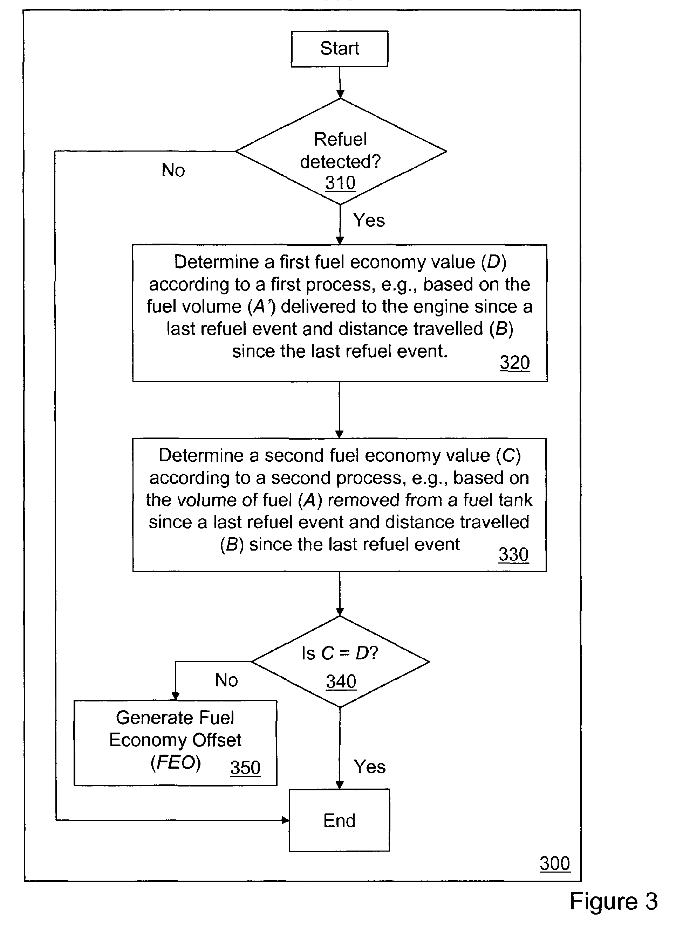

An exemplary process 300 of calculating FEO is illustrated in figure 3. The process 300 first detects a refuel event in step 310. According to an embodiment of the present invention, this is carried out by comparing a volume of fuel at an ignition-on state of vehicle operation with a volume of fuel at the previous ignition-off of the engine. If a refuel event is detected, the process 300 proceeds to step 320. Otherwise, the process 300 ends.

In steps 320 and 330, a first fuel economy value (D) and a second fuel economy value (C) are calculated according to a first process and a second process respectively. According to the embodiment illustrated in figure 3, the second fuel economy value (C) is determined based on the fuel volume (A) consumed since the last refuel event, e.g. the fuel volume ($A_3$) added during the refuel event, and the distance travelled since the last refuel event (B) according to *Equation 1.* The first fuel economy value (D) is determined based on the fuel volume (A') delivered to the engine since the last refuel event (according to the engine control unit) and the distance travelled since the last refuel event (B) according to the *Equation 2.*

In step 340, the second fuel economy value (C) is compared with the first fuel economy value (D). If C does not equate to D, the process 300 generates an FEO. According to the embodiment illustrated in figure 3, the FEO is calculated according to *Equation* 3 in step 350. If C equates to D, the process 300 ends.

An exemplary method of providing fuel economy information according to the present invention is illustrated in figure 4. The method 400 determines a current fuel economy measure (X) according to the first process in step 410. According to the embodiment illustrated in figure 4, X is determined based on the amount of fuel delivered to the engine according to the engine control unit and a distance travelled. In step 420, an FEO is determined. According to an embodiment of the present invention, the FEO is determined according to the process 300. In step 430, X is adjusted by the FEO. According to an embodiment, the adjustment is carried out based on *Equation 4.* In step 440, an adjusted fuel economy Y is displayed to the driver on a display means, e.g. on a combi-meter.

According to an embodiment of the present invention, the method is carried out in the processor 110.

Although the FEO is described as being determined according to *Equation 3,* other suitable forms of calculation may be used. Similarly, different processes for determining the first and second fuel economy values may be designed and/or used.

In an exemplary system and method, where the difference between fuel economy values calculated according to the first and second mechanisms exceeds a pre-determined threshold, a fault code may be generated by the system of the present invention. This fault code may be communicated to the engine control unit and/or the combi-meter to assist service personnel during regular maintenance. The fault code may provide an early indication that a component of the fuel system needs replacing.

The above described and illustrated system and method of the present invention provide a continually adjusting fuel economy measure based on the actual fuel consumption throughout the life of a motor vehicle. By employing the second mechanism to calculate fuel economy based on the actual fuel consumption, any inaccuracy caused by the deterioration of fuel injection components is compensated for.

Although the present invention has been illustrated and described with regard to specific embodiments, those skilled in the art will appreciate that various modifications may be made to these embodiments without departing from the principle of the present invention as defined by the appended claims.

**Claims**

1. A system (100) for providing fuel economy information in a motor vehicle, comprising:

   a first mechanism configured to determine a first fuel economy (D) using a first process;
   a second mechanism configured to determine a second fuel economy (C) using a second process; and
   a mechanism configured to generate a fuel economy offset (FEO) based on the first fuel economy (D) and the second fuel economy (C),
   wherein the system (100) adjusts a current fuel economy measure (X) determined in accordance with the first process using the fuel economy offset (FEO);
   and the system (100) further comprises a fuel sensor (130) in a fuel tank (160) of the motor vehicle and configured to measure a volume of fuel ($V_f$) in the tank;
   the system being configured to detect a refuel event;
   **characterized in that**:

   the system (100) is further configured to generate the fuel economy offset (FEO) when the refuel event is detected.

**2.** The system (100) according to claim 1, wherein the system is configured to detect the refuel event by comparing a fuel volume ($V_{f2}$) at an ignition-on state of vehicle operation with a fuel volume ($V_{f1}$) prior to the previous ignition-off state of vehicle operation.

**3.** The system (100) according to claim 1 or claim 2, wherein the first mechanism is configured to determine fuel economy (X) based on a volume of fuel delivered to an engine of the motor vehicle and a distance travelled by the motor vehicle.

**4.** The system (100) according to claim 3, wherein the first mechanism is configured to determine the first fuel economy (D) based on a volume of fuel (A') delivered to the engine since the last refuel event and a distance travelled (B) since the last refuel event.

**5.** The system (100) according to claim 4, wherein the system is configured to obtain the volume of fuel (A') delivered to the engine from an engine control unit (120) of the motor vehicle.

**6.** The system (100) according to any preceding claim, wherein the second mechanism is configured to determine fuel economy (C) based on a volume of fuel (A) removed from a fuel tank (160) since a last refuel event and a distance travelled (B) by the motor vehicle since the last refuel event.

**7.** The system (100) according to any preceding claim, wherein the offset (FEO) is dependent on the difference between the first fuel economy (D) and the second fuel economy (C); and wherein the system is configured to generate the offset (FEO) only if the second fuel economy (C) is different from the first fuel economy (D).

**8.** The system (100) according to any preceding claim, wherein the system comprises a display means (150) configured to determine and display fuel economy information.

**9.** A method of providing fuel economy information in a motor vehicle, comprising:

generating a first fuel economy (D) using a first process;
generating a second fuel economy (C) using a second process;
generating a fuel economy offset (FEO) based on the first fuel economy (D) and the second fuel economy (C); and
adjusting a current fuel economy measure calculated in accordance with the first process using the fuel economy offset (FEO);
**characterized in that**:

the method further comprises detecting a refuel event, wherein the fuel economy offset (FEO) is generated when the refuel event is detected.

**10.** The method according to claim 9, wherein the refuel detection comprises comparing a fuel volume ($V_{f2}$) at an ignition-on state of vehicle operation with a fuel volume ($V_{f1}$) at the previous ignition-off state of vehicle operation.

**11.** The method according to claim 9 or claim 10, wherein the first process calculates fuel economy (X) based on a volume of fuel delivered to an engine of the motor vehicle and a distance travelled by the motor vehicle.

**12.** The method according to claim 11, wherein the first fuel economy (D) is calculated based on a volume of fuel (A') delivered to the engine since the last refuel event and a distance travelled (B) by the motor vehicle since the last refuel event.

**13.** The method according to claim 9 or claim 10, wherein the second process calculates fuel economy (C) based on a volume of fuel (A) removed from a fuel tank (160) since a last refuel event and a distance travelled (B) by the motor vehicle since the last refuel event.

**14.** The method according to any one of claims 9 to 13, wherein the offset is dependent on the difference between the first fuel economy (D) and the second fuel economy (C); and wherein the offset is generated only if the second fuel economy (C) is different from the first fuel economy (D).

**15.** The method according to any one of claims 9 to 14, further comprising displaying the adjusted current fuel economy measure (Y).

**16.** A computer readable medium having stored thereon instructions for carrying out the method according to any one of claims 9 to 15.

**Patentansprüche**

**1.** System (100) zum Bereitstellen von Kraftstoffwirtschaftlichkeitsinformationen in einem Kraftfahrzeug, Folgendes umfassend:

einen ersten Mechanismus, der dafür gestaltet ist, mit Hilfe eines ersten Prozesses eine erste Kraftstoffwirtschaftlichkeit (D) zu bestimmen,
einen zweiten Mechanismus, der dafür gestaltet ist, mit Hilfe eines zweiten Prozesses eine zweite Kraftstoffwirtschaftlichkeit (C) zu bestimmen, und
einen Mechanismus, der dafür gestaltet ist, basierend auf der ersten Kraftstoffwirtschaftlichkeit (D) und der zweiten Kraftstoffwirtschaftlichkeit (C) eine Kraftstoffwirtschaftlichkeitsabweichung (FEO) zu erzeugen,
wobei das System (100) einen gegenwärtigen Kraftstoffwirtschaftlichkeits-Messwert (X), der gemäß dem ersten Prozess bestimmt wurde, unter Verwendung der Kraftstoffwirtschaftlichkeitsabweichung (FEO) justiert,
und das System (100) ferner einen Kraftstoffsensor (130) in einem Kraftstofftank (160) des Kraftfahrzeugs umfasst, der dafür gestaltet ist, ein Kraftstoffvolumen ($V_f$) im Tank zu messen, und das System ferner dafür gestaltet ist, ein Auftankereignis zu erkennen,
**dadurch gekennzeichnet, dass**:

das System (100) ferner dafür gestaltet ist, die Kraftstoffwirtschaftlichkeitsabweichung (FEO) zu erzeugen, wenn das Auftankereignis erkannt wird.

**2.** System (100) nach Anspruch 1, wobei das System dafür gestaltet ist, das Auftankereignis durch Vergleichen eines Kraftstoffvolumens ($V_{f2}$) in einem Fahrzeugbetriebszustand mit eingeschalteter Zündung mit einem Kraftstoffvolumen ($V_{f1}$) vor dem vorherigen Fahrzeugbetriebszustand mit ausgeschalteter Zündung zu erkennen.

**3.** System (100) nach Anspruch 1 oder 2, wobei der erste Mechanismus dafür gestaltet ist, basierend auf einem Kraftstoffvolumen, das dem Motor eines Kraftfahrzeuges zugeführt wurde, und einer durch das Kraftfahrzeug zurückgelegten Entfernung eine Kraftstoffwirtschaftlichkeit (X) zu bestimmen.

**4.** System (100) nach Anspruch 3, wobei der erste Mechanismus dafür gestaltet ist, die erste Kraftstoffwirtschaftlichkeit (D) basierend auf einem Kraftstoffvolumen (A'), das dem Motor seit dem letzten Auftankereignis zugeführt wurde, und einer seit dem letzten Auftankereignis zurückgelegten Entfernung (B) zu bestimmen.

**5.** System (100) nach Anspruch 4, wobei das System dafür gestaltet ist, das Kraftstoffvolumen (A'), das dem Motor zugeführt wurde, von einer Motorsteuereinheit (120) des Kraftfahrzeugs zu erhalten.

**6.** System (100) nach einem der vorhergehenden Ansprüche, wobei der zweite Mechanismus dafür gestaltet ist, die Kraftstoffwirtschaftlichkeit (C) basierend auf einem Kraftstoffvolumen (A), das seit dem letzten Auftankereignis aus einem Kraftstofftank (160) entnommen wurde, und einer Entfernung (B), die seit dem letzten Auftankereignis durch das Kraftfahrzeug zurückgelegt wurde, zu bestimmen.

**7.** System (100) nach einem der vorhergehenden Ansprüche, wobei die Abweichung (FEO) von der Differenz zwischen der ersten Kraftstoffwirtschaftlichkeit (D) und der zweiten Kraftstoffwirtschaftlichkeit (C) abhängt und wobei das System dafür gestaltet ist, die Abweichung (FEO) nur dann zu erzeugen, wenn sich die zweite Kraftstoffwirtschaftlichkeit (C) von der ersten Kraftstoffwirtschaftlichkeit (D) unterscheidet.

**8.** System (100) nach einem der vorhergehenden Ansprüche, wobei das System ein Anzeigemittel (150) umfasst, das dafür gestaltet ist, Kraftstoffwirtschaftlichkeitsinformationen anzuzeigen.

**9.** Verfahren zum Bereitstellen von Kraftstoffwirtschaftlichkeitsinformationen in einem Kraftfahrzeug, Folgendes umfassend:

Erzeugen einer ersten Kraftstoffwirtschaftlichkeit (D) mit Hilfe eines ersten Prozesses,
Erzeugen einer zweiten Kraftstoffwirtschaftlichkeit (C) mit Hilfe eines zweiten Prozesses,

# EP 2 362 192 B1

Erzeugen einer Kraftstoffwirtschaftlichkeitsabweichung (FEO), basierend auf der ersten Kraftstoffwirtschaftlichkeit (D) und der zweiten Kraftstoffwirtschaftlichkeit (C), und

Justieren eines gegenwärtigen Kraftstoffwirtschaftlichkeits-Messwertes, der gemäß dem ersten Prozess berechnet wurde, unter Verwendung der Kraftstoffwirtschaftlichkeitsabweichung (FEO),

**dadurch gekennzeichnet, dass**:

das Verfahren ferner das Erkennen eines Auftankereignisses umfasst, wobei die Kraftstoffwirtschaftlichkeitsabweichung (FEO) erzeugt wird, wenn das Auftankereignis erkannt wird.

10. Verfahren nach Anspruch 9, wobei das Erkennen des Auftankens das Vergleichen eines Kraftstoffvolumens ($V_{f2}$) in einem Fahrzeugbetriebszustand mit eingeschalteter Zündung mit einem Kraftstoffvolumen ($V_{f1}$) beim vorherigen Fahrzeugbetriebszustand mit ausgeschalteter Zündung umfasst.

11. Verfahren nach Anspruch 9 oder 10, wobei der erste Prozess basierend auf einem Kraftstoffvolumen, das dem Motor eines Kraftfahrzeuges zugeführt wurde, und einer Entfernung, die durch das Kraftfahrzeug zurückgelegt wurde, eine Kraftstoffwirtschaftlichkeit (X) berechnet.

12. Verfahren nach Anspruch 11, wobei die erste Kraftstoffwirtschaftlichkeit (D) basierend auf einem Kraftstoffvolumen (A'), das dem Motor seit dem letzten Auftankereignis zugeführt wurde, und einer Entfernung (B), die seit dem letzten Auftankereignis durch das Kraftfahrzeug zurückgelegt wurde, berechnet wird.

13. Verfahren nach Anspruch 9 oder 10, wobei der zweite Prozess die Kraftstoffwirtschaftlichkeit (C) basierend auf einem Kraftstoffvolumen (A), das seit einem letzten Auftankereignis aus einem Kraftstofftank (160) entnommen wurde, und einer Entfernung (B), die seit dem letzten Auftankereignis durch das Kraftfahrzeug zurückgelegt wurde, berechnet.

14. Verfahren nach einem der Ansprüche 9 bis 13, wobei die Abweichung von der Differenz zwischen der ersten Kraftstoffwirtschaftlichkeit (D) und der zweiten Kraftstoffwirtschaftlichkeit (C) abhängt und wobei die Abweichung nur dann erzeugt wird, wenn sich die zweite Kraftstoffwirtschaftlichkeit (C) von der ersten Kraftstoffwirtschaftlichkeit (D) unterscheidet.

15. Verfahren nach einem der Ansprüche 9 bis 14, ferner das Anzeigen des justierten gegenwärtigen Kraftstoffwirtschaftlichkeits-Messwertes (Y) umfassend.

16. Computerlesbares Medium, das auf ihm gespeicherte Befehle zum Ausführen des Verfahrens nach einem der Ansprüche 9 bis 15 aufweist.

## Revendications

1. Système (100) de fourniture d'informations d'économie de carburant dans un véhicule à moteur, comprenant :

un premier mécanisme configuré pour déterminer une première économie de carburant (D) en utilisant un premier processus ;

un second mécanisme configuré pour déterminer une seconde économie de carburant (C) en utilisant un second processus ; et

un mécanisme configuré pour générer un décalage d'économie de carburant (FEO) en fonction de la première économie de carburant (D) et de la seconde économie de carburant (C),

dans lequel le système (100) règle une mesure d'économie de carburant courante (X) déterminée en fonction du premier processus au moyen du décalage d'économie de carburant (FEO) ;

et le système (100) comprend en outre un capteur de carburant (130) dans un réservoir de carburant (160) du véhicule à moteur et configuré pour mesurer un volume de carburant ($V_f$) dans le réservoir ;

le système étant configuré pour détecter un événement de remplissage en carburant ;

**caractérisé en ce que** :

le système (100) est configuré en outre pour générer le décalage d'économie de carburant (FEO) quand l'événement de remplissage en carburant est détecté.

9

**2.** Système (100) selon la revendication 1, dans lequel le système est configuré pour détecter l'événement de remplissage en carburant en comparant un volume de carburant ($V_{f2}$) à un état de mise en marche du fonctionnement du véhicule à un volume de carburant ($V_{f1}$) avant l'état d'arrêt antérieur du fonctionnement du véhicule.

**3.** Système (100) selon la revendication 1 ou la revendication 2, dans lequel le premier mécanisme est configuré pour calculer l'économie de carburant (X) en fonction d'un volume de carburant délivré à un moteur du véhicule à moteur et d'une distance parcourue par le véhicule à moteur.

**4.** Système (100) selon la revendication 3, dans lequel le premier mécanisme est configuré pour déterminer la première économie de carburant (D) en fonction d'un volume de carburant (A') délivré au moteur depuis le dernier événement de remplissage en carburant et d'une distance parcourue (B) depuis le dernier événement de remplissage en carburant.

**5.** Système (100) selon la revendication 4, dans lequel le système est configuré pour obtenir le volume de carburant (A') délivré au moteur depuis une unité de commande de moteur (120) du véhicule à moteur.

**6.** Système (100) selon l'une quelconque des revendications précédentes, dans lequel le second mécanisme est configuré pour déterminer l'économie de carburant (C) en fonction d'un volume de carburant (A) retiré d'un réservoir à carburant (160) depuis un dernier événement de remplissage en carburant et d'une distance parcourue (B) par le véhicule à moteur depuis le dernier événement de remplissage en carburant.

**7.** Système (100) selon l'une quelconque des revendications précédentes, dans lequel le décalage (FEO) dépend de la différence entre la première économie de carburant (D) et la seconde économie de carburant (C) ; et dans lequel le système est configuré pour générer le décalage (FEO) uniquement si la seconde économie de carburant (C) est différente de la première économie de carburant (D).

**8.** Système (100) selon l'une quelconque des revendications précédentes, dans lequel le système comprend un moyen d'affichage (150) configuré pour déterminer et afficher des informations d'économie de carburant.

**9.** Procédé de fourniture d'informations d'économie de carburant dans un véhicule à moteur, comprenant :

la génération d'une première économie de carburant (D) en utilisant un premier processus ;
la génération d'une seconde économie de carburant (C) en utilisant un second processus ;
la génération d'un décalage d'économie de carburant (FEO) en fonction de la première économie de carburant (D) et de la seconde économie de carburant (C) ; et
le réglage d'une mesure d'économie de carburant courante calculée selon le premier processus au moyen du décalage d'économie de carburant (FEO) ;
**caractérisé en ce que** :

le procédé comprend en outre la détection d'un événement de remplissage en carburant, le décalage d'économie de carburant (FEO) étant généré quand l'événement de remplissage en carburant est détecté.

**10.** Procédé selon la revendication 9, dans lequel la détection de remplissage en carburant comprend la comparaison d'un volume de carburant ($V_{f2}$) à un état de mise en marche du fonctionnement du véhicule à un volume de carburant ($V_{f1}$) à l'état d'arrêt antérieur du fonctionnement du véhicule.

**11.** Procédé selon la revendication 9 ou la revendication 10, dans lequel le premier processus calcule l'économie de carburant (X) en fonction d'un volume de carburant délivré à un moteur du véhicule à moteur et d'une distance parcourue par le véhicule à moteur.

**12.** Procédé selon la revendication 11, dans lequel la première économie de carburant (D) est calculée en fonction d'un volume de carburant (A') délivré au moteur depuis le dernier événement de remplissage en carburant et d'une distance parcourue (B) par le véhicule à moteur depuis le dernier événement de remplissage de carburant.

**13.** Procédé selon la revendication 9 ou la revendication 10, dans lequel le second processus calcule l'économie de carburant (C) en fonction d'un volume de carburant (A) retiré d'un réservoir à carburant (160) depuis un dernier événement de remplissage en carburant et d'une distance parcourue (B) par le véhicule à moteur depuis le dernier événement de remplissage en carburant.

**14.** Procédé selon l'une quelconque des revendications 9 à 13, dans lequel le décalage dépend de la différence entre la première économie de carburant (D) et la seconde économie de carburant (C) ; et dans lequel le décalage est généré uniquement si la seconde économie de carburant (C) est différente de la première économie de carburant (D).

**15.** Procédé selon l'une quelconque des revendications 9 à 14, comprenant en outre l'affichage de la mesure d'économie de carburant courante réglée (Y).

**16.** Support lisible par ordinateur sur lequel sont mémorisées des instructions pour exécuter le procédé selon l'une quelconque des revendications précédentes 9 à 15.

Figure 1

| Resistance $R_v$ (Ω) | Fuel volume $V_f$ (L) |
|:---:|:---:|
| $R_{v1}$ | $V_{f1}$ |
| $R_{v2}$ | $V_{f2}$ |
| ... | ... |
| | 200 |

Figure 2

```
                          ┌─────────────┐
                          │    Start    │
                          └─────────────┘
                                 │
                                 ▼
                         ╱───────────────╲
                        ╱     Refuel       ╲
            No         ╱     detected?      ╲
      ┌──────────────────      310          │
      │              ╲                      ╱
      │               ╲                    ╱
      │                ╲──────────────────╱
      │                         │  Yes
      │                         ▼
      │   ┌────────────────────────────────────────────┐
      │   │  Determine a first fuel economy value (D)   │
      │   │  according to a first process, e.g., based on the │
      │   │  fuel volume (A') delivered to the engine since a │
      │   │  last refuel event and distance travelled (B) │
      │   │  since the last refuel event.        320     │
      │   └────────────────────────────────────────────┘
      │                         │
      │                         ▼
      │   ┌────────────────────────────────────────────┐
      │   │  Determine a second fuel economy value (C)  │
      │   │  according to a second process, e.g., based on │
      │   │  the volume of fuel (A) removed from a fuel tank │
      │   │  since a last refuel event and distance travelled │
      │   │  (B) since the last refuel event     330     │
      │   └────────────────────────────────────────────┘
      │                         │
      │                         ▼
      │                 ╱───────────────╲
      │                ╱    Is C = D?     ╲
      │       No      ╱       340          ╲
      │  ┌──────────────                    │
      │  │            ╲                    ╱
      │  ▼             ╲──────────────────╱
      │ ┌──────────────────┐      │  Yes
      │ │ Generate Fuel    │      ▼
      │ │ Economy Offset   │  ┌─────────┐
      │ │ (FEO)    350     │  │   End   │
      │ └──────────────────┘  └─────────┘
      │                           ▲
      └───────────────────────────┘
                                              300
```

Figure 3

Determine a
current fuel
economy
measure (*X*)

410

Generate a
*FEO*

420

Generate an adjusted
current fuel economy measure (*Y*)

430

Display the adjusted current
fuel economy measure

440

400

Figure 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20060190149 A

- WO 0017610 A